# EUROPÄISCHE PATENTSCHRIFT

(11) **EP 2 621 755 B1**
(45) Veröffentlichungstag und Bekanntmachung des Hinweises auf die Patenterteilung: **03.08.2016**
(21) Anmeldenummer: 11763715.7
(22) Anmeldetag: 30.09.2011
(51) Int. Cl.: B60N 2/20, B60N 2/36

(54) **FAHRZEUGSITZ**
VEHICLE SEAT
SIÈGE DE VÉHICULE

(30) Priorität: 30.09.2010 DE 102010047038
(43) Veröffentlichungstag der Anmeldung: 07.08.2013
(73) Patentinhaber: Johnson Controls GmbH, 51399 Burscheid (DE)
(72) Erfinder: DILSEN, Michael, 41849 Wassenberg (DE); HEINRICH, Jens, 42719 Solingen (DE); ZENEFELS, Andreas, 51647 Gummersbach (DE)
(74) Vertreter: Finger, Catrin
(86) Internationale Anmeldenummer: PCT/EP2011/067108
(87) Internationale Veröffentlichungsnummer: WO 2012/042018

(56) Entgegenhaltungen:
- EP-A1- 2 523 826
- WO-A2-2007/028506
- DE-A1-102004 054 165
- FR-A1- 2 889 123

## Beschreibung

Die Erfindung betrifft einen Fahrzeugsitz mit einem Sitzteil und einer Rückenlehne, welche von einer im Wesentlichen aufrechten Gebrauchsstellung unter Wirkung einer Federeinrichtung in eine im Wesentlichen horizontale Lade- oder Nichtgebrauchsstellung klappbar ist, wobei beim Vorklappen aus der Gebrauchsstellung in die Nichtgebrauchsstellung mittels der Federeinrichtung eine in Richtung der Nichtgebrauchsstellung gerichtete Federkraft erzeugbar ist.

Ein gattungsgemäßer Fahrzeugsitz ist in der WO 2011/086165 A1 beschrieben. Weitere Fahrzeugsitze sind aus der deutschen Patentanmeldung DE 10 2004 002 795 A1 und der DE 10 2005 043 254 A1 bekannt. Bei diesen Fahrzeugsitzen unterstützt jeweils eine Federeinrichtung das Vorklappen der Rückenlehne. Nachfolgend wird die Feder abgekoppelt, so dass nur noch die Schwerkraft der Rückenlehne in Richtung der Ladestellung wirkt.

Aus der FR 2 889 123 A1 und WO 2007/028506 A2 sind Federeinrichtungen bekannt, welche am Gelenk angeordnet sind.

Aufgabe der vorliegenden Erfindung ist es, einen Fahrzeugsitz mit einer verbesserten Vorklappfunktion der Rückenlehne anzugeben.

Die Aufgabe wird erfindungsgemäß durch die Merkmale des Anspruchs 1 gelöst.

Vorteilhafte Weiterbildungen der Erfindung sind Gegenstand der Unteransprüche.

Die Aufgabe wird erfindungsgemäß mit einem Fahrzeugsitz gelöst, der ein Sitzteil und eine Rückenlehne umfasst, welche insbesondere fernentriegelt von einer im Wesentlichen aufrechten Gebrauchsstellung unter Wirkung einer Federeinrichtung in eine im Wesentlichen horizontale Nichtgebrauchsstellung klappbar ist, wobei die Federeinrichtung in der Gebrauchsstellung eine erste Vorspannung aufweist, durch welche die Rückenlehne bei Entriegelung in die Nichtgebrauchsstellung klappbar ist, wobei die Federeinrichtung beim Vorklappen der Rückenlehne bis nach Überschreiten eines Totpunktes und bis zum Anschlagen an ein Stütz- oder Anschlagelement entspannt und bei weiterer Schwenkbewegung der Rückenlehne in die Nichtgebrauchsstellung ein dieser Schwenkbewegung gegengerichtetes Drehmoment aufbaut. Hierdurch wird die Schwenkbewegung der Rückenlehne abgebremst. Das anliegende gegengerichtete Drehmoment, das gegen die Gewichtskraft der Rückenlehne wirkt, unterstützt den Bediener des Fahrzeugsitzes bei Aufstellung der Rückenlehne in die Gebrauchsstellung.

Eine Weiterbildung der Erfindung sieht vor, dass die Federeinrichtung bei vollständig umgeklappter Rückenlehne eine maximale Kraft, insbesondere eine zweite Vorspannung, entgegen der Gewichtskraft der Rückenlehne auf die Stützanordnung ausübt. Das daraus resultierende anliegende Drehmoment, welches gegen die Gewichtskraft der Rückenlehne wirkt, unterstützt den Bediener des klappbaren Fahrzeugsitzes in einfacher Art und Weise beim Aufstellen der Rückenlehne in die Gebrauchsstellung.

Gemäß einer Weiterbildung der Erfindung ist die Federeinrichtung an der Rückenlehne derart drehbeweglich gelagert, dass sich die Bewegung der Rückenlehne in die Federeinrichtung überträgt.

In einer weiteren Ausgestaltung weist die Federeinrichtung bei einer Schwenkbewegung der Rückenlehne zwischen der Gebrauchsstellung und der Nichtgebrauchsstellung einen Freigang auf. Hierdurch ist die Federeinrichtung bei einer Bewegung zwischen zwei Endlagen, der Gebrauchsstellung und der Nichtgebrauchsstellung, nicht zwangsgeführt und folgt somit einfach und sicher der von der Rückenlehne auf die Federeinrichtung übertragenen Bewegung.

In einer möglichen Ausführungsform ist die Stützanordnung hierzu aus zumindest zwei im Wesentlichen runden Stützrollen gebildet, die in einem Abstand voneinander entfernt angeordnet sind und auf denen die Federeinrichtung gleitend anordbar ist. Hierzu weisen die Oberflächen der Stützrollen und der Federeinrichtung ein entsprechendes Material, insbesondere Oberflächenmaterial mit einem entsprechenden Reibungswiderstand auf. Auf diese Weise lässt sich eine gute Kraft- und Bewegungsübertragung sicherstellen.

Zur Aufnahme der auf die Stützanordnung wirkenden Kräfte umfasst diese eine Stützplatte, die an einem fahrzeugseitigen Gelenk des Fahrzeugsitzes befestigt ist. Dabei ist eine der Stützrollen der Stützanordnung in Richtung der Rückenlehne auf der Stützplatte als obere Rolle und die andere in Richtung des Sitzteils auf der Stützplatte als untere Stützrolle angeordnet. Dabei verläuft die Federeinrichtung mit ihrem freien Ende von der oberen Stützrolle weg, kehrt im freien Abstand zwischen den Stützrollen um und liegt mit dem freien Ende an der unteren Stützrolle an. Eine solche Federeinrichtung in Kombination mit der Stützanordnung ermöglicht eine leichte Montage und eine leichte Gängigkeit.

Vorzugsweise ist die Federeinrichtung als eine Torsionsfeder, insbesondere als Feder- oder Torsionsstab oder Bändern aus Federstahl, ausgebildet. Alternativ kann die Federeinrichtung als eine Drehstabfeder ausgebildet sein. Eine solche Federeinrichtung benötigt wenig Bauraum und ist kostengünstig herstellbar. Über Abmessungen, wie Durchmesser und Länge, und Material der Feder kann die beim Verschwenken auf das Sitzteil wirkende Rückstellkraft vorgegeben werden.

Zweckmäßigerweise sind die Federenden, insbesondere zur Drehachse, abgewinkelt. Das heißt die Federeinrichtung ist als Torsionsfeder, insbesondere als ein gebogener oder mittig abgewinkelter Federstab oder Bändern aus Federstahl, ausgebildet. Dies erleichtert die Führung und Lagerung der Feder zwischen den Stützrollen der Stützanordnung. Dabei ragt die Federeinrichtung am gegenüberliegenden Ende frei aus der Rückenlehne hinaus und ist derart abgewinkelt, dass das abgewinkelte Federende parallel zur Lehnenaußenseite verläuft und auf der Stützanordnung abstützbar ist und gegen diese wirkt.

Ausführungsbeispiele der Erfindung werden anhand der beigefügten schematischen Figuren näher erläutert. Dabei zeigen:
- Fig. 1: schematisch eine Rückenlehne für einen Fahrzeugsitz in einer Gebrauchsstellung, und
- Fig. 2: schematisch die Rückenlehne gemäß Figur 1 in einer Nichtgebrauchsstellung.

Einander entsprechende Teile sind in allen Figuren mit den gleichen Bezugszeichen versehen.

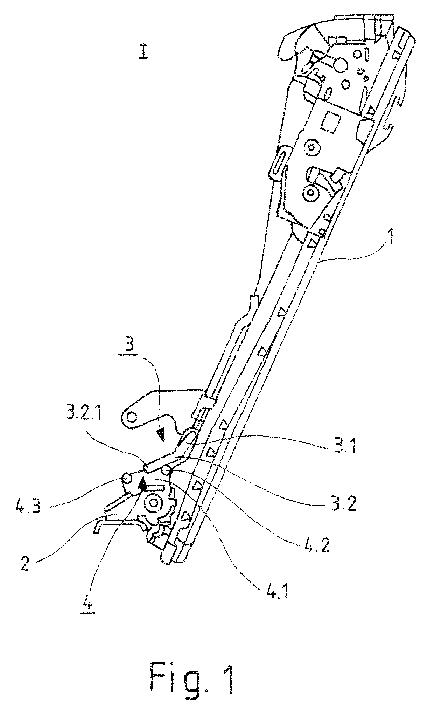

Die Figur 1 zeigt in einer perspektivischen Ansicht eine Rückenlehne 1 eines Fahrzeugsitzes, welcher nicht näher dargestellt ist und üblicherweise ein nicht dargestelltes Sitzteil aufweist, das mit seinem hinteren Ende an der Rückenlehne 1 angeordnet ist.

Die Rückenlehne 1 ist an ihrem unteren Ende mittels eines Gelenks 2 gegenüber einem nicht dargestellten Sitzteil schwenkbar gelagert. Dabei kann die Rückenlehne 1 zwischen zwei Endpositionen, einer Gebrauchsstellung I und einer Nichtgebrauchsstellung II, geschwenkt werden.

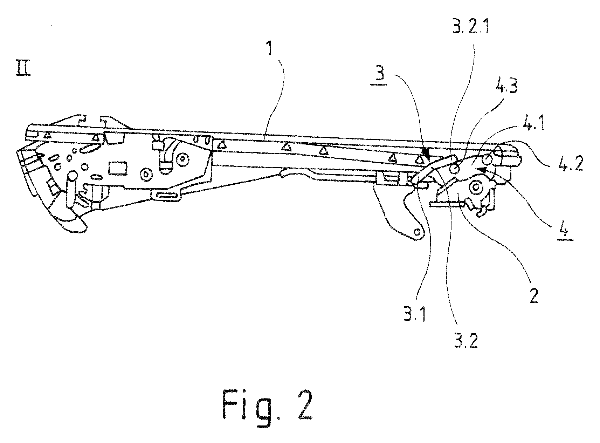

Figur 1 zeigt die Rückenlehne 1 in der Gebrauchsstellung I, d.h. eine senkrechte Stellung. Figur 2 zeigt die Rückenlehne 1 in der Nichtgebrauchsstellung II, d.h. in einer horizontalen Stellung, auch Ladestellung genannt.

Für eine komfortable Fernentriegelung der Rückenlehne 1, bei welcher diese von der Gebrauchsstellung I in die Nichtgebrauchsstellung II sicher und nach Überschreitung eines oberen Totpunktes mit reduzierter Geschwindigkeit schwenkbar, insbesondere abklappbar ist, weist die Rückenlehne 1 eine Federeinrichtung 3 und eine mit dieser zusammenwirkende Stützanordnung 4 (die auch als Adapter bezeichnet wird) auf.

Die Federeinrichtung 3 ist als eine in der Rückenlehne 1 angeordnete und dort an mehreren nicht näher dargestellten Lagerstellen drehbeweglich gelagerte Torsionsfeder 3.1 oder Drehstabfeder ausgebildet, wobei ein nicht näher dargestelltes Federende in der Rückenlehne 1 derart gelagert ist, dass sich die Bewegung der Rückenlehne 1 in die Torsionsfeder 3.1 überträgt. Ein diesem Federende gegenüberliegendes Federende 3.2 ragt aus der Rückenlehne 1 hinaus und ist derart abgewinkelt, dass das abgewinkelte Federende 3.2 weitgehend parallel zur Lehnenaußenseite verläuft. Dabei liegt das abgewinkelte Federende 3.2 auf der Stützanordnung 4 auf und stützt sich gegen diese ab. Hierzu weist das abgewinkelte Federende 3.2 ein freies Ende 3.2.1 auf, das gegen die Stützanordnung 4 wirkt und an dieser abgestützt ist.

Die Stützanordnung 4 weist zwei an einer Stützplatte 4.1 angeordnete Stützrollen 4.2, 4.3, eine in Richtung der Rückenlehne 1 auf der Stützplatte 4.1 angeordnete obere Stützrolle 4.2 und eine weitere, in Richtung des Sitzteils auf der Stützplatte 4.1 angeordnete untere Stützrolle 4.3, auf.

In der Gebrauchsstellung I der Rückenlehne 1 ist die Torsionsfeder 3.1 über das frei aufliegende Ende 3.2.1 an der oberen Stützrolle 4.2 mit einer ersten Vorspannung abgestützt, siehe Figur 1.

In der Nichtgebrauchsstellung II der Rückenlehne 1 ist die Torsionsfeder 3.1 über das frei aufliegende Ende 3.2.1 des abgewinkelten Federendes 3.2 an der unteren Stützrolle 4.3 mit einer zweiten Vorspannung abgestützt.

Zwischen der Abstützung des frei aufliegenden Endes 3.2.1 des abgewinkelten Federendes 3.2 der Torsionsfeder 3.1 auf der oberen Stützrolle 4.2 und der unteren Stützrolle 4.3 weist die Torsionsfeder 3.1 bei einer Schwenkbewegung der Rückenlehne 1 zwischen den beiden Endpositionen I und II einen Freigang auf. Somit ist das abgewinkelte Federende 3.2 der Torsionsfeder 3.1 zwischen den beiden Endlagen oder -positionen I und II nicht zwangsgeführt und kann daher der von der Rückenlehne 1 über das nicht dargestellte Federende in die Torsionsfeder 3.1 übertragenen Bewegung folgen.

Im Betrieb des Fahrzeugs ist die Rückenlehne 1 beispielsweise von einem nicht dargestellten Kofferraum fernentriegelbar.

Bedingt durch die erste Vorspannung der Torsionsfeder 3.1 mit der Kraft in Richtung auf die obere Stützrolle 4.2 wird ein Drehmoment erzeugt, welches die Rückenlehne 1 aus der Gebrauchsstellung I in Richtung der Nichtgebrauchsstellung II bewegt.

Durch die Schwenkbewegung wird die Torsionsfeder 3.1 entspannt, bis sie, d.h. deren freies Ende 3.2.1, nach Überschreiten eines Totpunktes an die untere Stützrolle 4.3 anschlägt.

Bei weiterer Schwenkbewegung der Rückenlehne 1 nach vorn und somit in die Nichtgebrauchsstellung II wird ein dieser Schwenkbewegung gegengerichtetes Drehmoment aufgebaut, wodurch die Schwenkbewegung der Rückenlehne 1 entsprechend abgebremst wird, d.h. die Geschwindigkeit der Schwenkbewegung der abzuklappenden Rückenlehne 1 wird nach Überschreitung des oberen Totpunktes reduziert.

Bei der Schwenkbewegung der Rückenlehne 1 zwischen den beiden Endpositionen I und II weist die Torsionsfeder 3.1, insbesondere deren abgewinkeltes Federende 3.2 einen Freigang auf, d.h. das abgewinkelte Federende 3.2 der Torsionsfeder 3.1 ist nicht zwangsgeführt, sondern kann der von der Rückenlehne 1 über das nicht dargestellte Federende in die Torsionsfeder 3.1 übertragenen Bewegung folgen.

Hierdurch muss die Torsionsfeder 3.1 nicht auf den gesamten Schwenk- oder Vorklappwinkel der Rückenlehne 1 ausgelegt werden. Die Torsionsfeder 3.1 kann somit je nach Anforderung an den Schwenk- oder Vorklappwinkel und dem Gewicht der Rückenlehne 1 individuell ausgelegt werden. Hierdurch wird, im Vergleich zu herkömmlichen beidseitig eingespannten und befestigten Torsionsfedern, eine längere Lebensdauer der zumindest einseitig frei beweglichen Torsionsfeder 3.1 erreicht.

Bei komplett umgeklappter Rückenlehne 1, wie in Figur 2 gezeigt, übt die Torsionsfeder 3.1 ihre maximale Kraft auf die untere Stützrolle 4.3 aus. Die Darstellung der entspannten Feder unterhalb der unteren Stützrolle 4.3 in Strichlinien-Darstellung dient nur der Veranschaulichung, wie die Lage der Feder ohne die untere Stützrolle 4.3 wäre.

Das anliegende Drehmoment, welches gegen die Gewichtskraft der Rückenlehne 1 wirkt, unterstützt den Bediener bei der Aufstellung der Rückenlehne 1 in die Gebrauchsstellung.

### Bezugszeichenliste

- 1: Rückenlehne
- 2: Gelenk
- 3: Federeinrichtung
- 3.1: Torsionsfeder
- 3.2: Federende
- 3.2.1: freies Ende
- 4: Stützanordnung
- 4.1: Stützplatte
- 4.2: obere Stützrolle
- 4.3: untere Stützrolle

- I: Gebrauchsstellung
- II: Nichtgebrauchstellung

## Patentansprüche

1. Fahrzeugsitz mit einem Sitzteil und einer Rückenlehne (1), welche von einer im Wesentlichen aufrechten Gebrauchsstellung (I) unter Wirkung einer Federeinrichtung (3) in eine im Wesentlichen horizontale Nichtgebrauchsstellung (II) klappbar ist,
wobei die Federeinrichtung (3) in der Gebrauchsstellung (I) eine erste Vorspannung aufweist, durch welche die Rückenlehne (1) bei Entriegelung in die Nichtgebrauchsstellung (II) klappbar ist, wobei die Federeinrichtung (3) beim Vorklappen der Rückenlehne (1) bis nach Überschreiten eines Totpunktes und bis zum Anschlagen an eine Stützanordnung (4) entspannt und bei weiterer Schwenkbewegung der Rückenlehne (1) in die Nichtgebrauchsstellung (II) ein dieser Schwenkbewegung gegengerichtetes Drehmoment aufbaut, wobei die Stützanordnung (4) an einem Gelenk (2) angeordnet ist und die Federeinrichtung (3) an der Rückenlehne (1) drehbeweglich gelagert ist und ein stützseitiges freies Federende (3.2) der Federeinrichtung (3) auf der Stützanordnung (4) derart angeordnet ist, dass die Federeinrichtung (3) bei einer Schwenkbewegung der Rückenlehne (1) zwischen der Gebrauchsstellung (I) und der Nichtgebrauchsstellung (II) einen Freigang aufweist, der mittels einer Stützrolle (4.3) der Stützanordnung (4) begrenzt ist,
**dadurch gekennzeichnet, dass** die Federeinrichtung (3) an einem Ende (3.2) frei aus der Rückenlehne (1) hinausragt und derart abgewinkelt ist, dass das abgewinkelte Federende (3.2) parallel zur Lehnenaußenseite verläuft und ein freies Ende (3.2.1) aufweist, das aus der Parallelen zur Lehnenaußenseite weg nach vorne gebogen ist und auf der Stützanordnung (4) abstützbar ist und gegen diese wirkt.

2. Fahrzeugsitz nach Anspruch 1, **dadurch gekennzeichnet, dass** die Federeinrichtung (3) bei vollständig umgeklappter Rückenlehne (1) eine maximale Kraft entgegen der Gewichtskraft der Rückenlehne (1) auf die Stützanordnung (4) ausübt.

3. Fahrzeugsitz nach Anspruch 1 oder 2, **dadurch gekennzeichnet, dass** die Federeinrichtung (3) an der Rückenlehne (1) derart drehbeweglich gelagert ist, dass sich die Bewegung der Rückenlehne (1) in die Federeinrichtung (3) überträgt.

4. Fahrzeugsitz nach einem der vorhergehenden Ansprüche, **dadurch gekennzeichnet, dass** die Stützanordnung (4) aus zumindest zwei im Wesentlichen runden Stützrollen (4.2, 4.3) gebildet ist, die in einem Abstand voneinander entfernt angeordnet sind und auf denen die Federeinrichtung (3) gleitend anordbar ist.

5. Fahrzeugsitz nach einem der vorhergehenden Ansprüche, **dadurch gekennzeichnet, dass** die Stützanordnung (4) eine Stützplatte (4.1) umfasst, die an einem Gelenk (2) des Fahrzeugsitzes befestigt ist.

6. Fahrzeugsitz nach Anspruch 5 rückbezogen auf Anspruch 4, **dadurch gekennzeichnet, dass** eine der Stützrollen (4.2, 4.3) in Richtung der Rückenlehne (1) auf der Stützplatte (4.1) als obere Rolle und die andere in Richtung des Sitzteils auf der Stützplatte (4.1) als untere Stützrolle (4.3) angeordnet ist.

7. Fahrzeugsitz nach einem der vorhergehenden Ansprüche, **dadurch gekennzeichnet, dass** die Federeinrichtung (3) als eine Torsionsfeder (3.1) ausgebildet ist.

8. Fahrzeugsitz nach einem der Ansprüche 1 bis 6, **dadurch gekennzeichnet, dass** die Federeinrichtung (3) als eine Drehstabfeder ausgebildet ist.

## Claims

1. Vehicle seat having a seat part and a backrest (1) which is foldable from a substantially upright use position (I) into a substantially horizontal non-use position (II) under the action of a spring device (3),
wherein the spring device (3) has a first pretension in the use position (I), the backrest (1) being foldable into the non-use position (II) by said first pretension on unlocking, wherein the spring device (3) relaxes as the backrest (1) is folded forwards until it passes through a dead-centre position and until it strikes a support arrangement (4), and, with continued pivoting motion of the backrest (1) into the non-use position (II), builds up torque directed counter to this pivoting motion, wherein the support arrangement (4) is arranged at a joint (2) and the spring device (3) is mounted in a rotatable manner on the backrest (1), and a support-side free spring end (3.2) of the spring device (3) is arranged on the support arrangement (4) such that, during a pivoting motion of the backrest (1) between the use position (I) and the non-use position (II), the spring device (3) has freedom of movement which is delimited by means of a support roller (4.3) of the support arrangement (4),
**characterized in that** the spring device (3) projects freely out of the backrest (1) at one end (3.2) and is angled such that the angled spring end (3.2) extends parallel to the backrest outer side and has a free end (3.2.1) that is bent forwards away from the lines parallel to the backrest outer side and is supportable on the support arrangement (4) and acts against the latter.

2. Vehicle seat according to Claim 1, **characterized in that** the spring device (3) exerts a maximum force counter to the weight force of the backrest (1) on the support arrangement (4) with the backrest (1) folded down fully.

3. Vehicle seat according to Claim 1 or 2, **characterized in that** the spring device (3) is mounted rotatably on the backrest (1) such that the motion of the backrest (1) is transferred into the spring device (3).

4. Vehicle seat according to one of the preceding claims, **characterized in that** the support arrangement (4) is formed by at least two substantially round support rollers (4.2, 4.3) which are arranged at a distance apart from one another and on which the spring device (3) is arrangeable in a sliding manner.

5. Vehicle seat according to one of the preceding claims, **characterized in that** the support arrangement (4) comprises a support plate (4.1) which is fastened to a joint (2) of the vehicle seat.

6. Vehicle seat according to Claim 5 when depending from claim 4, **characterized in that** one of the support rollers (4.2, 4.3) is arranged on the support plate (4.1) as an upper roller in the direction of the backrest (1) and the other is arranged on the support plate (4.1) as a lower support roller (4.3) in the direction of the seat part.

7. Vehicle seat according to one of the preceding claims, **characterized in that** the spring device (3) is configured as a torsion spring (3.1).

8. Vehicle seat according to one of the claims 1 to 6, **characterized in that** the spring device (3) is configured as a torsion bar spring.

## Revendications

1. Siège de véhicule comprenant une partie de siège et un dossier (1) qui peut être rabattu d'une position d'utilisation essentiellement redressée (I) sous l'action d'un dispositif à ressort (3) dans une position de non utilisation essentiellement horizontale (II),
le dispositif à ressort (3) présentant, dans la position d'utilisation (I) une première précontrainte, par le biais de laquelle le dossier (1) peut être rabattu lors du déverrouillage dans la position de non utilisation (II), le dispositif à ressort (3) se détendant lors du rabattement vers l'avant du dossier (1) jusqu'à dépasser un point mort et jusqu'à venir en butée contre un agencement de support (4) et lors d'un mouvement de pivotement supplémentaire du dossier (1) dans la position de non utilisation (II), un couple opposé à ce mouvement de pivotement s'établissant, l'agencement de support (4) étant disposé au niveau d'une articulation (2) et le dispositif à ressort (3) étant supporté de manière déplaçable en rotation sur le dossier (1) et une extrémité libre de ressort du côté du support (3.2) du dispositif à ressort (3) étant disposée sur l'agencement de support (4) de telle sorte que le dispositif à ressort (3), lors d'un mouvement de pivotement du dossier (1) entre la position d'utilisation (I) et la position de non utilisation (II), présente une course libre qui est limitée au moyen d'un rouleau d'appui (4.3) de l'agencement de support (4),
**caractérisé en ce que** le dispositif à ressort (3) fait saillie librement au-delà du dossier (1) au niveau d'une extrémité (3.2) et est coudé de telle sorte que l'extrémité coudée du ressort (3.2) s'étende parallèlement au côté extérieur du dossier et présente une extrémité libre (3.2.1) qui est cintrée vers l'avant à l'écart de la parallèle au côté extérieur du dossier et peut être supportée sur l'agencement de support (4) et agit contre celui-ci.

2. Siège de véhicule selon la revendication 1, **caractérisé en ce que** le dispositif à ressort (3), lorsque le dossier (1) est complètement rabattu, exerce une force maximale à l'encontre de la force de pesanteur du dossier (1) sur l'agencement de support (4).

3. Siège de véhicule selon la revendication 1 ou 2, **caractérisé en ce que** le dispositif à ressort (3) est supporté de manière déplaçable en rotation au niveau du dossier (1) de telle sorte que le déplacement du dossier (1) soit transféré au dispositif à ressort (3).

4. Siège de véhicule selon l'une quelconque des revendications précédentes, **caractérisé en ce que** l'agencement de support (4) est formé d'au moins deux rouleaux de support essentiellement ronds (4.2, 4.3) qui sont disposés à distance l'un de l'autre et sur lesquels le dispositif à ressort (3) peut être disposé avec glissement.

5. Siège de véhicule selon l'une quelconque des revendications précédentes, **caractérisé en ce que** l'agencement de support (4) comprend une plaque de support (4.1) qui est fixée à une articulation (2) du siège de véhicule.

6. Siège de véhicule selon la revendication 5, en dépendance de la revendication 4, **caractérisé en ce que** l'un des rouleaux de support (4.2, 4.3) est disposé dans la direction du dossier (1) sur la plaque de support (4.1) en tant que rouleau supérieur et l'autre des rouleaux de support est disposé dans la direction de la partie de siège sur la plaque de support (4.1) en tant que rouleau de support inférieur (4.3).

7. Siège de véhicule selon l'une quelconque des revendications précédentes, **caractérisé en ce que** le dispositif à ressort (3) est réalisé sous forme de ressort de torsion (3.1).

8. Siège de véhicule selon l'une quelconque des revendications 1 à 6, **caractérisé en ce que** le dispositif à ressort (3) est réalisé sous forme de ressort à barre de torsion.
